# EUROPEAN PATENT APPLICATION

(11) **EP 4 166 591 A1**
(43) Date of publication of application: **19.04.2023**
(21) Application number: 22199732.3
(22) Date of filing: 05.10.2022
(51) Int. Cl.: C08G 59/22, C08G 59/50, C08L 63/00, C09J 163/00

(54) **EPOXY-BASED COMPOSITION AND TWO-COMPONENT EPOXY ADHESIVE COMPOSITION WITH HIGH ELONGATION COMPRISING THE SAME**

(30) Priority: 14.10.2021 KR 20210136242
(71) Applicant: Pusan National University Industry - University Cooperation Foundation, Busan 46241 (KR)
(72) Inventor: CHOE, Youngson, 47747 Busan (KR)
(74) Representative: Laine IP Oy

(57) **Abstract**

Disclosed are an epoxy-based composition having high elongation and a two-component epoxy adhesive composition comprising the same. The epoxy-based composition comprises a diglycidyl ether-based compound; and an amine-based compound, wherein the amine-based compound includes polyether amine. The two-component epoxy adhesive composition includes a resin part; and a curing agent part, wherein the resin part contains the epoxy-based composition.

## Description

### BACKGROUND

### 1. Field

The present disclosure relates to an epoxy-based composition and a two-component epoxy adhesive composition comprising the same.

### 2. Description of Related Art

An adhesive composition may replace or improve conventional bonding means such as screws, bolts, nails, staples, rivets and metal fusing processes. The adhesive is widely used not only in real life, but also in industries that require high performance, such as the automobile industry and the aerospace industry. In order for this adhesive composition to be used for a suitable purpose, high mechanical strength thereof is required.

Among adhesive compositions, a two-component adhesive composition is an adhesive composition that realizes adhesion via a chemical reaction by mixing two compositions in an adhesion process. Because a conventional adhesive composition realizes an adhesive force via contact with air or drying, the adhesive force that may be realized by an material included in the adhesive composition is inherently limited, and thus the limited adhesive force is also partially lost during a storage process. To the contrary, in the two-component adhesive composition, the realization of the adhesive force does not start in the storage state, so that the loss of adhesive strength during the storage is small. A chemical curing reaction is initiated only when the adhesive force is realized in the adhesion process, such that the adhesive force that can be realized by the material included in the two-component adhesive composition is inherently strong. Among these two-component adhesive compositions, a two-component epoxy adhesive composition is generally used.

The two-component epoxy adhesive composition is composed of a resin part and a curing agent part. Thus, when the resin part and the curing agent part are mixed with each other, a curing reaction that realizes adhesion is initiated. Changing components included in the resin part and the curing agent part may allow a mechanical strength of the two-component epoxy adhesive composition to be realized based on use purpose thereof. In particular, when the two-component epoxy adhesive composition is exposed to harsh environments such as machines, automobiles, or aircraft, high mechanical strength such as high elongation is required. Thus, a component of the two-component epoxy adhesive composition which can achieve the high elongation should be identified.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

One purpose of the present disclosure is to provide an epoxy-based composition as a component of a two-component epoxy adhesive composition that may achieve high elongation.

Another purpose of the present disclosure is to provide a two-component epoxy adhesive composition comprising the epoxy-based composition.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

A first aspect of the present disclosure provides an epoxy-based composition comprising: a diglycidyl ether-based compound; and an amine-based compound, wherein the amine-based compound may include polyether amine.

In one implementation of the first aspect, the diglycidyl ether-based compound may include bisphenol-derived diglycidyl ether.

In one implementation of the first aspect, the diglycidyl ether-based compound may further include a chain diol-derived diglycidyl ether.

In one implementation of the first aspect, the bisphenol-derived diglycidyl ether may have a following Chemical Formula (I): 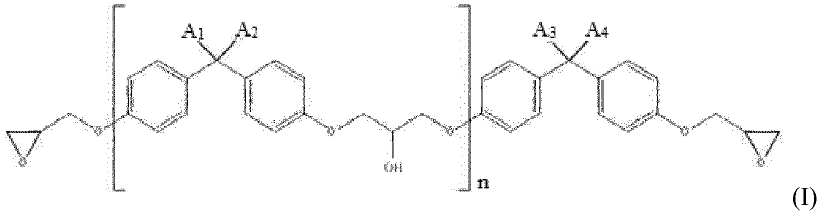
wherein each of A₁, A₂, A₃ and A₄ may be independently selected from a group consisting of hydrogen, methyl, ethyl, propyl, butyl, phenyl and halogen, analogs thereof, and substituents thereof,
n may be an integer from 1 to 100.

In one implementation of the first aspect, each of A₁, A₂, A₃ and A₄ may be methyl.

In one implementation of the first aspect, the chain diol-derived diglycidyl ether may have a following Chemical Formula (II): 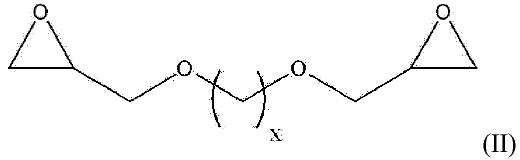 wherein x may be an integer from 1 to 10.

In one implementation of the first aspect, x may be 6.

In one implementation of the first aspect, a ratio of a weight of the bisphenol-derived diglycidyl ether and a weight of the chain diol-derived diglycidyl ether in the diglycidyl ether-based compound may be in a range of 1:1 to 5:1.

In one implementation of the first aspect, the polyether amine may include a polyether amine having a following Chemical Formula (III):

CH₃-[OCH₂CH₂]_{y}-[OCH₂CH(CH₃)]_{z}-NH₂ (III)

wherein each of y and z may be an integer from 1 to 50.

In one implementation of the first aspect, the polyether amine having the Chemical Formula (III) may have a molecular weight of 500 to 2000.

A second aspect of the present disclosure provides a two-component epoxy adhesive composition comprising: a resin part; and a curing agent part; wherein the resin part contains the epoxy-based composition according to one of claims 1 to 10.

In one implementation of the second aspect, a mixture of the diglycidyl ether-based compound and the amine-based compound included in the epoxy-based composition may be subjected to a reaction to form a cross-link, and then may be added to the resin part, wherein the resin part may further include bisphenol A-derived diglycidyl ether.

In one implementation of the second aspect, the two-component epoxy adhesive composition may have an elongation of 3% or larger.

In one implementation of the second aspect, the resin part may further include 1,6-hexene diol-derived diglycidyl ether, wherein a ratio of a weight of the bisphenol A-derived diglycidyl ether and a weight of 1,6-hexene diol-derived diglycidyl ether may be in a range of 2:1 to 5:1.

In one implementation of the second aspect, the two-component epoxy adhesive composition may have an elongation of 10% or larger.

As described above, the epoxy-based composition according to an embodiment of the present disclosure may impart the high elongation to the two-component epoxy adhesive composition.

The two-component epoxy adhesive composition according to an embodiment of the present disclosure may have high elongation.

In addition to the effects as described above, specific effects in accordance with the present disclosure will be described together with the detailed description for carrying out the disclosure.

### DETAILED DESCRIPTIONS

Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is for the purpose of describing particular embodiments only and is not intended to limit the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In descriptions of temporal relationships, for example, temporal precedent relationships between two events such as "after", "subsequent to ", "before", etc., another event may occur therebetween unless "directly after", "directly subsequent" or "directly before" is not indicated.

The features of the various embodiments of the present disclosure may be partially or entirely combined with each other, and may be technically associated with each other or operate with each other. The embodiments may be implemented independently of each other and may be implemented together in an association relationship.

An epoxy-based composition according to an embodiment of the present disclosure may comprise a diglycidyl ether-based compound; and an amine-based compound, wherein the amine-based compound may include polyether amine.

As used herein, "diglycidyl ether" refers to an ether having two or more glycidyl functional groups, for example, two glycidyl functional groups. As used herein, the "glycidyl functional group" refers to an epoxide functional group and a functional group having a carbon chain structure bonded to a carbon of the epoxide functional group. As used herein, "ether" refers to a group of organic compounds in which hydrocarbon or a derivative thereof is bonded to each of both opposing ends of an oxygen atom. Non-limiting examples of diglycidyl ether may include bisphenol-derived diglycidyl ether and diol-derived diglycidyl ether.

In one embodiment, the diglycidyl ether-based compound may include bisphenol-derived diglycidyl ether. As used herein, "bisphenol" refers to a group of compounds in which phenol is bonded to each of both opposing sides of a carbon atom, wherein each of remaining two reaction sites of the carbon atom except for the both opposing sides thereof may be bonded to each functional group or a single unsaturated functional group. The phenol bonded to each of both opposing sides of the carbon atom may include a functional group. Non-limiting examples of bisphenol may include bisphenol A, bisphenol AP, bisphenol AF, bisphenol B, bisphenol BP, bisphenol C, bisphenol C2, bisphenol E, bisphenol F, bisphenol G, bisphenol M, bisphenol S, bisphenol P, bisphenol PH, bisphenol TMC, bisphenol Z, dinitrobisphenol A and tetrabromobisphenol A, derivatives thereof, and combinations thereof. Therefore, as used herein, "bisphenol-derived diglycidyl ether" refers to a compound in which hydrogen atoms of at least two phenol groups, for example, two phenol groups of bisphenol, analog thereof, derivative thereof, substituent thereof, or polymer thereof are substituted with a glycidyl functional group.

In one embodiment, the diglycidyl ether-based compound may further include a chain diol-derived diglycidyl ether. As used herein, "diol" refers to a group of organic compounds having two or more hydroxyl functional groups (-OH), for example, two hydroxyl functional groups (-OH). Non-limiting examples of diols may include propanediol, 1,3-butanediol, 1,4-butanediol, isomers of pentanediol, and isomers of hexanediol, and analogs thereof and substituents thereof. Therefore, as used herein, "diol-derived diglycidyl ether" refers to a compound in which hydrogen atoms of at least two hydroxy functional groups, for example, two hydroxy functional groups of diol, analog thereof, derivative thereof, substituent thereof, and polymer thereof are substituted with a glycidyl functional group.

In one embodiment, the bisphenol-derived diglycidyl ether may have a following Chemical Formula (I). 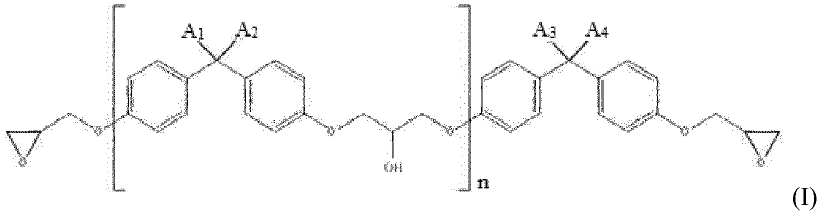 where each of A₁, A₂, A₃ and A₄ may be independently selected from a group consisting of hydrogen, methyl, ethyl, propyl, butyl, phenyl and halogen, analogs thereof, and substituents thereof;
n may be an integer from 1 to 100.

In one embodiment, each of A₁, A₂, A₃ and A₄ may be methyl.

In one embodiment, the chain diol-derived diglycidyl ether may have a following Chemical Formula (II). 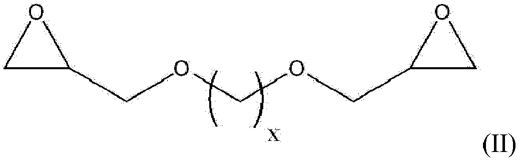 where x may be an integer from 1 to 10.

In one embodiment, x may be 6. That is, the chain diol-derived diglycidyl ether may be 1,6-hexene diol-derived diglycidyl ether.

In one embodiment, a ratio of a weight of the bisphenol-derived diglycidyl ether and a weight of the chain diol-derived diglycidyl ether in the diglycidyl ether-based compound may be in a range of 1:1 to 5:1.

The polyether amine may include a polyether amine having a following Chemical Formula (III).

CH₃-[OCH₂CH₂]_{y}-[OCH₂CH(CH₃)]_{z}-NH₂ (III)

Where each of y and z may be an integer from 1 to 50.

In one embodiment, the polyether amine having the Chemical Formula (III) may have a molecular weight of 500 to 2000.

In another aspect, a two-component epoxy adhesive composition according to an embodiment of the present disclosure may comprise a resin part; and a curing agent part, wherein the resin part may include the epoxy-based composition according to an embodiment of the present disclosure. As used herein, each of the resin part and the curing agent part of the two-component epoxy adhesive composition may include a component that those skilled in the art may easily select for preparing the two-component epoxy adhesive composition. Non-limiting examples of the component which may be selected may include another type of diglycidyl ether-based compound, another type of amine-based compound and another type of epoxy resin, cyanurate or analog thereof, and combinations thereof.

In one embodiment, a mixture included in the epoxy-based composition may be subjected to a reaction to form a cross-link and then may be added to the resin part. The resin part may further include bisphenol A-derived diglycidyl ether. That is, an intermediate product of the epoxy-based composition may be first produced and then may be added to the resin part of the two-component epoxy adhesive composition according to an embodiment of the present disclosure. The two-component epoxy adhesive composition may have an elongation of 3% or greater.

In one embodiment, the resin part may further include 1,6-hexene diol-derived diglycidyl ether, and a ratio of a weight of the bisphenol A-derived diglycidyl ether and a weight of 1,6-hexene diol-derived diglycidyl ether may be in a range of 2:1 to 5:1. The two-component epoxy adhesive composition may have an elongation of 10% or larger.

Hereinafter, Examples of the present disclosure will be described in detail. However, the Examples as described below are only some implementations of the present disclosure, and the scope of the present disclosure is not limited to the following Examples.

### [Present Example 1]

59.5 g of YD-128 (bisphenol-derived diglycidyl ether) and 25.5 g of 1,6-HDGE (hexene diol-derived diglycidyl ether) was input into a 200 mL reactor to prepare a mixture and then the mixture was stirred at room temperature for 10 minutes. Then, SURFONAMINE^{™} L-100 (polyether amine) 15 g was added thereto. Then, the mixture was stirred for 60 minutes while maintaining a temperature at 120 °C. Then, the reaction mixture was cooled at room temperature. Thus, an epoxy-based composition according to Present Example 1 of the present disclosure was prepared.

### [Present Example 2]

TETA (triethylenetriamine) 10 parts by weight, ATBN (amine terminated butadiene acrylonitrile) 1300X16 10 parts by weight, Ancamine K54 6 parts by weight, Jaffamine T-403 10 parts by weight, Jaffamine D230 15 parts by weight and DICY (Dicyandiamide) 4 parts by weight were mixed with each other to prepare a curing agent part. A resin part was prepared by mixing 70 parts by weight of YD-128, 10 parts by weight of urethane QR-9466, 10 parts by weight of 1,6-HDGE, 1 part by weight of epoxy silane, and 10 parts by weight of the epoxy-based composition according to Present Example 1 with each other. Prior to application, the resin part and the curing agent part were mixed with each other and a mixture was stirred at room temperature for 20 minutes. Thus, a two-component epoxy adhesive composition according to Present Example 2 of the present disclosure comprising the resin part and the curing agent part was prepared.

### [Present Example 3]

A two-component epoxy adhesive composition was prepared in the same manner as in Present Example 2, except that the resin part was prepared by adding 60 parts by weight of YD-128 and 20 parts by weight of the epoxy-based composition according to Present Example 1. Thus, a two-component epoxy adhesive composition according to Present Example 3 of the present disclosure was prepared.

### [Present Example 4]

A two-component epoxy adhesive composition was prepared in the same manner as in Present Example 2, except that the resin part was prepared by adding 50 parts by weight of YD-128 and 30 parts by weight of the epoxy-based composition according to Present Example 1. Thus, a two-component epoxy adhesive composition according to Present Example 4 of the present disclosure was prepared.

### [Present Example 5]

A two-component epoxy adhesive composition was prepared in the same manner as in Present Example 2, except that the resin part was prepared by adding 40 parts by weight of YD-128 and 40 parts by weight of the epoxy-based composition according to Present Example 1. Thus, a two-component epoxy adhesive composition according to Present Example 5 of the present disclosure was prepared.

### [Present Example 6]

A two-component epoxy adhesive composition was prepared in the same manner as in Present Example 2, except that the resin part was prepared by adding 30 parts by weight of YD-128 and 50 parts by weight of the epoxy-based composition according to Present Example 1. Thus, a two-component epoxy adhesive composition according to Present Example 6 of the present disclosure was prepared.

### [Present Example 7]

A two-component epoxy adhesive composition was prepared in the same manner as in Present Example 2, except that the resin part was prepared by adding 20 parts by weight of YD-128 and 60 parts by weight of the epoxy-based composition according to Present Example 1. Thus, a two-component epoxy adhesive composition according to Present Example 7 of the present disclosure was prepared.

### [Comparative Example 1]

A two-component epoxy adhesive composition was prepared in the same way as in Present Example 2, except that urethane QR-9466 and the epoxy-based composition according to Present Example 1 were not added. Thus, a two-component epoxy adhesive composition according to Comparative Example 1 was prepared.

### [Experimental Example 1]

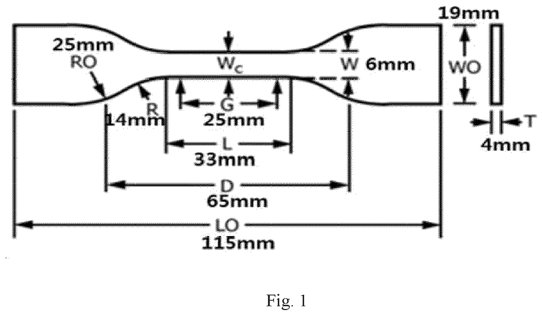

A two-component epoxy adhesive composition according to each of Present Examples 1 to 7 and Comparative Example 1 was converted into a specimen. The specimen was manufactured by injecting the two-component epoxy adhesive composition according to each of Present Examples 1 to 7 and Comparative Example 1 into a mold having a shape and dimensions as shown in figure 1.

The prepared specimen was left at 23°C for 5 days. Then, the specimen was stretched at a rate of 5 mm per minute using a tensile tester ASTM D638 to test a tensile strength of the specimen. The experimental results are shown in a following [Table 1].

**Table 1**

| **Present Example/ Comparative Example** | **Comparative Example 1** | **Present Example 2** | **Present Example 3** | **Present Example 4** | **Present Example 5** | **Present Example 6** | **Present Example 7** |
|---|---|---|---|---|---|---|---|
| **Elongation (%)** | **1.5** | **5.4** | **7.3** | **10.8** | **15.7** | **21.0** | **25.4** |

Referring to Table 1, it may be identified that the two-component epoxy adhesive composition to which the epoxy-based composition according to each of Present Examples of the present disclosure is added has higher elongation compared to elongation of Comparative Example.

In particular, it may be identified that higher elongation may be achieved when the ratio of the weight of bisphenol A-derived diglycidyl ether and the weight of 1,6-hexenediol-derived diglycidyl ether is in a range of 2:1 to 5:1 according to Present Example 4 to Present Example 7 of the present disclosure.

The descriptions of the presented embodiments have been provided so that a person of ordinary skill in the art of any the present disclosure may use or practice the present disclosure. Various modifications to these embodiments will be apparent to those skilled in the art of the present disclosure, and the general principles defined herein may be applied to other embodiments without departing from the scope of the present disclosure. Thus, the present disclosure is not intended to be limited to the embodiments presented herein, but is to be construed in the widest scope consistent with the principles and novel features presented herein.

## Claims

1. An epoxy-based composition comprising:
a diglycidyl ether-based compound; and
an amine-based compound,
wherein the amine-based compound includes polyether amine.

2. The epoxy-based composition of claim 1, wherein the diglycidyl ether-based compound includes bisphenol-derived diglycidyl ether.

3. The epoxy-based composition of claim 2, wherein the diglycidyl ether-based compound further includes a chain diol-derived diglycidyl ether.

4. The epoxy-based composition of claim 3, wherein the bisphenol-derived diglycidyl ether has a following Chemical Formula (I): 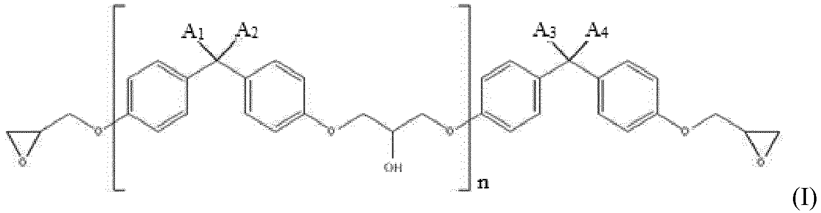 wherein each of A₁, A₂, A₃ and A₄ is independently selected from a group consisting of hydrogen, methyl, ethyl, propyl, butyl, phenyl and halogen, analogs thereof, and substituents thereof,
n is an integer from 1 to 100.

5. The epoxy-based composition of claim 4, wherein each of A₁, A₂, A₃ and A₄ is methyl.

6. The epoxy-based composition of claim 3, wherein the chain diol-derived diglycidyl ether has a following Chemical Formula (II): 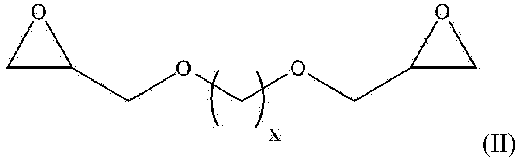 wherein x is an integer from 1 to 10.

7. The epoxy-based composition of claim 6, wherein x is 6.

8. The epoxy-based composition of claim 3, wherein a ratio of a weight of the bisphenol-derived diglycidyl ether and a weight of the chain diol-derived diglycidyl ether in the diglycidyl ether-based compound is in a range of 1:1 to 5:1.

9. The epoxy-based composition of claim 1, wherein the polyether amine includes a polyether amine having a following Chemical Formula (III):
CH₃-[OCH₂CH₂]_{y}-[OCH₂CH(CH₃)]_{z}-NH₂ (III)
wherein each of y and z is an integer from 1 to 50.

10. The epoxy-based composition of claim 9, wherein the polyether amine having the Chemical Formula (III) has a molecular weight of 500 to 2000.

11. A two-component epoxy adhesive composition comprising:
a resin part; and
a curing agent part;
wherein the resin part contains the epoxy-based composition according to one of claims 1 to 10.

12. The two-component epoxy adhesive composition of claim 11, wherein a mixture of the diglycidyl ether-based compound and the amine-based compound included in the epoxy-based composition is subjected to a reaction to form a cross-link, and then is added to the resin part,
wherein the resin part further includes bisphenol A-derived diglycidyl ether.

13. The two-component epoxy adhesive composition of claim 12, wherein the two-component epoxy adhesive composition has an elongation of 3% or larger.

14. The two-component epoxy adhesive composition of claim 12, wherein the resin part further includes 1,6-hexene diol-derived diglycidyl ether,
wherein a ratio of a weight of the bisphenol A-derived diglycidyl ether and a weight of 1,6-hexene diol-derived diglycidyl ether is in a range of 2: 1 to 5:1.

15. The two-component epoxy adhesive composition of claim 14, wherein the two-component epoxy adhesive composition has an elongation of 10% or larger
